# FASCICULE DE BREVET EUROPEEN

(11) **EP 0 606 029 B1**
(45) Date de publication et mention de la délivrance du brevet: **21.01.1998**
(21) Numéro de dépôt: 93403062.8
(22) Date de dépôt: 16.12.1993
(51) Int. Cl.: G06K 19/073, G07F 7/10

(54) **Carte à puce avec données et programmes protégés contre le vieillissement**
IC Karte mit alterunggeschützten Daten und Programmen
IC card with data and programs protected against aging

(30) Priorité: 31.12.1992 FR 9215992
(43) Date de publication de la demande: 13.07.1994
(73) Titulaire: GEMPLUS CARD INTERNATIONAL, F-13420 Gémenos (FR)
(72) Inventeur: Farrugia, Augustin, c/o Cabinet BALLOT-SCHMIT, F-75116 Paris (FR); Geronimi, François, c/o Cabinet BALLOT-SCHMIT, F-75116 Paris (FR)
(74) Mandataire: Ballot, Paul Denis Jacques

(56) Documents cités:
- EP-A- 0 358 277
- EP-A- 0 457 310

## Description

L'invention concerne les cartes à puces, et tout spécialement celles qui comportent des données stockées en mémoires non volatiles électriquement programmables et effaçables (mémoires EEPROM).

Les cartes à puces comportent de plus en plus ce type de mémoire, pour contenir
- soit des données de personnalisation de la carte (code confidentiel, données d'identification de l'application autorisée ou de l'utilisateur autorisé, etc.),
- soit des données variables au cours de l'utilisation de la carte (crédit d'unités de pré-paiement, porte-monnaie, transactions, etc.),
- soit encore des programmes exécutables par un microprocesseur placé sur la même puce de circuit intégré, ces programmes étant stockés en mémoire non volatiles de manière à ne pas être figés au moment de la fabrication.

Ces mémoires EEPROM sont prévues à côté d'autres types de mémoire, vive (RAM) ou morte (ROM).

Par exemple, une utilisation fréquente des mémoires EEPROM est la suivante : un microprocesseur fonctionne pour l'essentiel avec des programmes stockés en mémoire morte (ROM), mais certains programmes, appelés filtres et placés en mémoire EEPROM, permettent de modifier les possibilités des programmes stockés en mémoire morte, ou permettent plus généralement de modifier l'application de la carte. Ces programmes sont placés dans une mémoire électriquement programmable de façon qu'on puisse les écrire dans la carte par programmation électrique après la fabrication, en fonction des besoins de l'application ou de l'utilisateur.

On s'est aperçu cependant que les cartes ainsi constituées risquaient de ne pas donner entièrement satisfaction du point de vue de la durée de vie.

L'invention propose principalement de placer dans la carte un programme supplémentaire de rafraîchissement du contenu de certaines zones de ces mémoires EEPROM, plus particulièrement celles qui contiennent des informations permanentes (données ou programmes), afin d'éliminer les risques d'altération des données ou programmes en cours de vie. Le programme de rafraîchissement est placé de préférence en mémoire morte (ROM), mais il peut aussi être placé en mémoire EEPROM. L'invention s'applique surtout dans le cas des cartes à puce à microprocesseur, et dans ce cas c'est le microprocesseur qui exécute un programme de rafraîchissement contenu dans une mémoire exécutable. En l'absence de microprocesseur il faudrait un séquenceur câblé pour exécuter un programme de rafraîchissement.

L'invention propose donc une carte à puce comportant au moins une mémoire EEPROM contenant au moins une zone de données permanentes, c'est-à-dire non susceptibles d'être modifiées à chaque utilisation de la carte, caractérisée en ce qu'elle comporte des moyens de rafraîchissement automatique de tout ou partie du contenu de cette zone.

Si la carte comporte un microprocesseur, les moyens de rafraîchissement sont constitués par une série d'instructions exécutables par le microprocesseur, ces instructions étant placées en mémoire morte ou au moins partiellement en mémoire EEPROM.

Le programme de rafraîchissement comporte alors de préférence une boucle itérative avec lecture du contenu d'un mot, puis écriture de ce mot avec le contenu lu, sans effacement préalable du mot, puis incrémentation d'une adresse de mémoire pour lire un mot suivant, ceci depuis le début jusqu'à la fin d'une partie de la zone ou de la zone de mémoire à rafraîchir.

La procédure de rafraîchissement peut être déclenchée par des conditions de branchement au programme de rafraîchissement qui sont, soit certaines dates, soit un certain nombre d'utilisations de la carte, soit systématiquement à chaque mise sous tension.

Il est prévu, selon le cas, que la carte comporte des moyens pour déclencher une procédure de rafraîchissement lorsque la carte est utilisée au delà d'un délai prédéterminé, après sa première mise en service ou après un rafraîchissement précédent. Ou bien, il peut être prévu que la carte comporte des moyens pour déclencher une procédure de rafraîchissement lorsque la carte a été utilisée un nombre prédéterminé de fois après sa première mise en service ou après un rafraîchissement précédent, ou bien, il peut être prévu que la carte comporte des moyens pour déclencher une procédure de rafraîchissement à chaque mise sous tension de la carte mais sur une partie seulement de la zone à rafraîchir, l'adresse de début de cette partie étant obtenue aléatoirement.

D'autres caractéristiques et avantages de l'invention apparaîtront à la lecture de la description détaillée qui suit et qui est faite en référence aux dessins annexés dans lesquels :
- la figure 1 représente une puce de carte à puce à microprocesseur;
- la figure 2 représente sous forme symbolique le contenu d'une mémoire EEPROM de la carte;
- la figure 3 représente un exemple d'organigramme des étapes de mise en oeuvre de l'invention.
- la figure 4 représente un autre exemple d'organigramme des étapes de mise en oeuvre de l'invention.

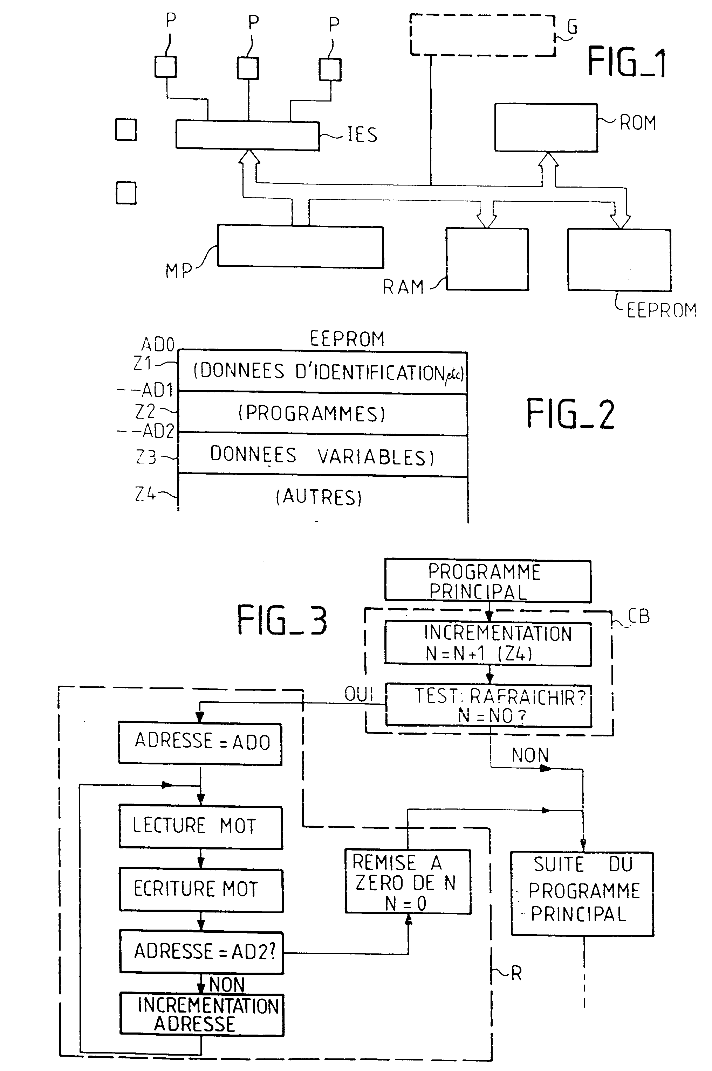

La puce représentée à la figure 1 est très classique. Elle comporte un microprocesseur MP, une mémoire vive de travail (RAM), une mémoire morte de programmes (ROM), et une mémoire non volatile effaçable et programmable électriquement (EEPROM), contenant des données et/ou des programmes. Le microprocesseur et les mémoires sont reliés entre eux par des bus de données et d'adresses, permettant également de communiquer avec l'extérieur de la puce par l'intermédiaire de plots de contacts P et éventuellement de circuits d'interface d'entrée/sortie IES.

La mémoire EEPROM peut contenir aussi bien des données permanentes que des données variables. Par l'expression "données variables", on entend des données susceptibles de varier au cours des utilisations successives de la carte, les données ou programmes permanents restant au contraire en principe inchangés d'une -utilisation à l'autre. Par exemple, les données permanentes sont des codes d'identification de la carte, des codes d'identification de l'application dans laquelle elle peut fonctionner, et éventuellement des codes d'identification ou d'authentification des utilisateurs autorisés. Ces données sont le plus souvent inscrites dans la carte à puce au moment de la personnalisation de la carte, c'est-à-dire après fabrication et test de la carte. C'est pourquoi elles sont inscrites en mémoire électriquement programmable. Les données variables sont celles qui sont inscrites dans la carte lors de l'utilisation de celle-ci, qui doivent être conservées de manière non volatile jusqu'à la prochaine utilisation, et qui peuvent ensuite être modifiées au cours de cette nouvelle utilisation. Par exemple, ce sont les crédits disponibles dans le cas de cartes bancaires ou de cartes à prépaiement, ou le solde d'un porte-monnaie électronique.

Par ailleurs, les informations inscrites dans certaines zones de la mémoire EEPROM peuvent être des programmes d'instructions exécutables par le microprocesseur. La plupart des programmes d'instructions sont contenus en principe dans la mémoire morte ROM, mais certains programmes peuvent être en mémoire EEPROM : ce sont des programmes ou des portions de programmes, ou encore des paramètres de modification de programmes de mémoire morte, qui sont spécifiques d'une application particulière parmi plusieurs applications possibles, ou encore d'un utilisateur ou groupe d'utilisateurs particuliers parmi d'autres utilisateurs possibles. Ces programmes ne sont donc inscrits dans la carte qu'au moment de la personnalisation, donc en principe après fabrication et test de la carte. Ils sont en principe permanents, sauf repersonnalisation de la carte.

La figure 2 représente une configuration possible de la mémoire EEPROM, avec une première zone Z1 contenant des données permanentes (identification, authentification, etc..), une deuxième zone Z2 contenant des programmes ou portions de programmes exécutables par le microprocesseur, une troisième zone Z3 contenant des données variables non volatiles engendrées au cours de l'utilisation et devant être conservées jusqu'à l'utilisation suivante, et enfin éventuellement d'autres zones de mémoire EEPROM désignées par Z4. On considérera que la première zone commence à une adresse de mémoire AD0 (adresse générée par le microprocesseur), qu'elle se termine à une adresse AD1, que la deuxième zone commence à l'adresse immédiatement suivante et qu'elle se termine à une adresse AD2.

Les zones Z1 et Z2 sont considérées dans cet exemple comme des zones contenant des informations de type "permanentes" et dont le contenu est crucial pour le fonctionnement de la carte. Ce sont des zones que l'on va rafraîchir périodiquement pour éviter toute altération de leur contenu par suite du vieillissement inévitable de la mémoire EEPROM. La zone Z3 et la zone Z4 ne seront pas rafraîchies.

Le rafraîchissement du contenu des zones Z1 et Z2 est déclenché à partir de conditions de branchement CB au programme de rafraîchissement qui est un sous-programme du programme principal. Les conditions de branchement peuvent comprendre un test portant, par exemple sur une date de rafraîchissement prédéterminée, ou sur un nombre d'utilisations maximal de la carte. C'est-à-dire qu'on considérera dans ce cas, par exemple qu'il est nécessaire de rafraîchir les zones Z1 et Z2 tous les ans, ou au bout de cent ou mille utilisations de la carte.

Ce test peut par exemple être effectué systématiquement à chaque nouvelle mise sous tension de la carte à puce. Il constitue alors une étape préliminaire de la mise en route de la carte.

Si le test est un test de date, le rafraîchissement peut être effectué systématiquement à certaines dates prédéterminées. Même si la carte ne contient pas elle même une date interne, le lecteur dans lequel elle est insérée possédera en général cette date; le microprocesseur pourra comparer cette date avec les dates prédéterminées; il testera par ailleurs l'état d'un bit drapeau indiquant si un rafraîchissement a été fait ou n'a pas encore été fait depuis la date critique. S'il a été fait, le programme principal d'utilisation de la carte se poursuit; sinon, un sous programme de rafraîchissement est exécuté avant retour au programme principal.

Si le test porte sur le nombre d'utilisations de la carte, on doit prévoir des moyens pour enregistrer, par exemple dans la zone Z4 de la mémoire EEPROM, un nombre N d'utilisations, incrémenté d'une unité à chaque nouvelle mise sous tension de la carte. L'incrémentation de ce nombre constitue alors un des programmes initiaux (en mémoire morte) de la mise en route de la carte à chaque utilisation.

La figure 3 schématise l'invention sous forme d'un organigramme d'un programme qui peut être exécuté par le microprocesseur. Ce programme est stocké en principe dans la mémoire morte ROM. Toutefois, on peut aussi envisager qu'il soit stocké en partie dans la mémoire EEPROM elle-même, par exemple dans la zone Z4. Cette dernière hypothèse sera utilisée lorsqu'on désire que le programme de rafraîchissement soit vendu optionnellement et non obligatoirement avec la carte à puce.

Sur la figure 3, on a représenté un organigramme de fonctionnement, qui suppose que le rafraîchissement est effectué au bout d'un nombre N0 d'utilisations de la carte après le précédent rafraîchissement.

Le programme principal en mémoire morte ROM se déroule et passe par une séquence d'incrémentation du nombre N d'utilisations de la carte; le nombre incrémenté est stocké dans la mémoire Z4; puis une séquence de comparaison de N avec le nombre prédéterminé N0 est effectué. Si N est inférieur à N0, le programme principal continue. Sinon, un branchement à un sous-programme de rafraîchissement R est effectué.

Le sous-programme R comporte d'abord une étape d'initialisation d'un compteur d'adresse du microprocesseur pour positionner le compteur sur l'adresse AD0 de début des zones Z1, Z2 à rafraîchir. Puis, une boucle de programme est effectuée tant qu'on n'a pas atteint la dernière adresse AD2 des zones de mémoire EEPROM à rafraîchir.

La boucle comporte une étape de lecture d'un mot de mémoire à l'adresse pointée par le compteur d'adresse, puis une étape d'écriture de ce mot avec le contenu qu'on vient de lire. L'écriture est effectuée de préférence sans effacement préalable, pour aller plus vite, alors qu'habituellement l'écriture d'un mot dans une mémoire EEPROM passe d'abord par l'effacement du mot. L'écriture sans effacement est possible puisqu'on réécrit le même mot.

Ensuite, on prévoit une étape de test du compteur d'adresse. Si on a atteint l'adresse AD2, on sort de la boucle; sinon, on incrémente l'adresse d'une unité et on retourne à l'étape de lecture, en vue de lire le mot suivant.

La sortie de la boucle, lorsque le mot de la dernière adresse AD2 a été réécrit, peut comporter une remise à zéro du nombre N d'utilisations de la carte, mémorisé dans la zone Z4; puis on retourne au programme principal.

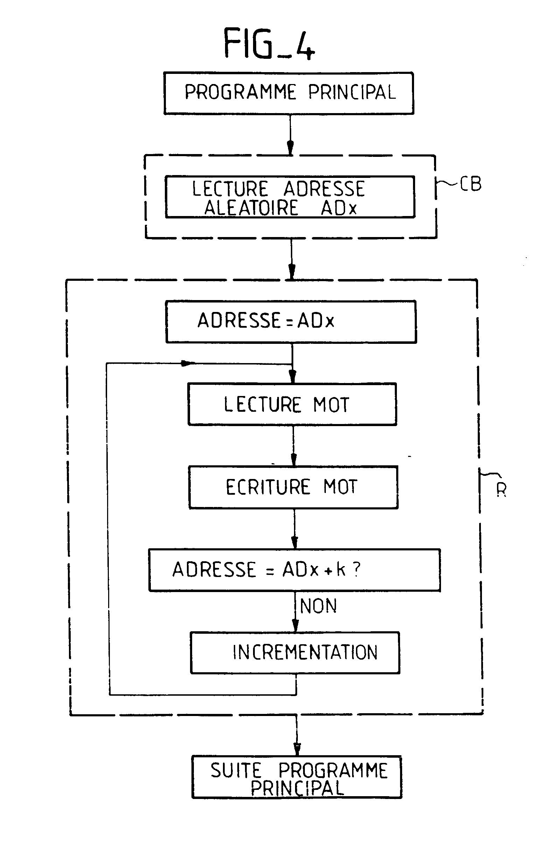

Selon un autre exemple de réalisation, il peut être prévu un rafraîchissement systématique d'une partie de la zone mémoire à rafraîchir et cela à chaque mise sous tension de la carte par exemple. En effet, on prévoit dans ce cas, un générateur aléatoire G, qui va fournir sur commande du processeur MP, à la mise sous tension, une adresse aléatoire ADx de l'espace adressable de la zone à rafraîchir. On peut se reporter au schéma de la figure 4 pour mieux comprendre.

Les conditions de branchement CB comportent alors, selon l'exemple, une lecture systématique du compteur d'adresse du microprocesseur à chaque mise sous tension.

Le programme principal en mémoire morte ROM se déroule et passe alors par la séquence de lecture de l'adresse aléatoire ADx générée par le générateur G. Un branchement à un sous-programme de rafraîchissement R est effectué.

Le sous-programme R comporte d'abord l'étape d'initialisation du compteur d'adresse du microprocesseur pour positionner le compteur sur l'adresse ADx de début de la partie A à rafraîchir.

Puis la boucle de programme R est effectuée tant qu'on n'a pas atteint la dernière adresse ADx+k de cette partie A. La valeur k a été au préalable mémorisée. Cette valeur est choisie en principe une fois pour toutes et fixe la taille des parties rafraîchies de la zone à rafraîchir. Le triage aléatoire d'une adresse par le générateur permet de rafraîchir toute la zone au bout d'une durée choisie convenable.

## Revendications

1. Carte à puce comportant au moins une mémoire EEPROM contenant au moins une zone de données permanentes (Z1, Z2), c'est-à-dire non susceptibles d'être modifiées à chaque utilisation de la carte, caractérisée en ce qu'elle comporte des moyens de rafraîchissement automatique du contenu de cette zone.

2. Carte à puce selon la revendication 1, comportant un microprocesseur (MP) avec une mémoire morte (ROM), caractérisée en ce que les moyens de rafraîchissement sont constitués par une série d'instructions exécutables par le microprocesseur (MP).

3. Carte à puce selon la revendication 2, caractérisée en ce que la série d'instructions est placée dans la mémoire morte (ROM).

4. Carte à puce selon la revendication 2, caractérisée en ce que la série d'instructions est placée au moins en partie dans la mémoire EEPROM.

5. Carte à puce selon l'une des revendications précédentes, caractérisée en ce que le programme comporte une boucle itérative avec lecture du contenu d'un mot, puis écriture de ce mot avec le contenu lu, sans effacement préalable du mot, puis incrémentation d'une adresse de mémoire pour lire un mot suivant, ceci depuis le début (AD0) jusqu'à la fin (AD2) de la zone de mémoire à rafraîchir.

6. Carte à puce selon l'une des revendications précédentes, caractérisée en ce qu'elle comporte des moyens pour déclencher une procédure de rafraîchissement (R) lorsque la carte est utilisée au delà d'une date prédéterminée après sa première mise en service ou après un rafraîchissement précédent.

7. Carte à puce selon l'une des revendications 1 à 5, caractérisée en ce qu'elle comporte des moyens pour déclencher une procédure de rafraîchissement (R) lorsque la carte a été utilisée un nombre prédéterminé de fois (Nφ) après sa première mise en service ou après un rafraîchissement précédent.

8. Carte à puce selon l'une quelconque des revendications 1 à 5, caractérisée en ce qu'elle comporte des moyens pour déclencher une procédure de rafraîchissement (R) à chaque mise sous tension de la carte, d'une partie de la zone mémoire à rafraîchir.

9. Carte à puce selon la revendication 8, caractérisée en ce que les moyens pour déclencher la procédure de rafraichissement (R) comprennent un générateur aléatoire, générant une adresse aléatoire comprise dans l'espace d'adressage de la zone à rafraîchir.

10. Carte à puce selon la revendication 9, caractérisée en ce que l'adresse générée est l'adresse de début de la partie à rafraîchir, l'adresse de fin AD(x+k) de la partie étant obtenue par incrémentation de l'adresse de début ADx d'un nombre prédéterminé k.

## Patentansprüche

1. Chipkarte mit wenigstens einem EEPROM-Speicher, der wenigstens eine Zone für permanente das heißt nicht für ein Modifizieren bei jeder Benutzung der Karte zugängliche Daten (Z1, Z2) beinhaltet,
dadurch gekennzeichnet, daß
sie Vorrichtungen zum automatischen Auffrischen des Inhalts dieser Zone umfaßt.

2. Chipkarte nach Anspruch 1, die einen Mikroprozessor (MP) mit einem Festwertspeicher (ROM) umfaßt, dadurch gekennzeichnet, daß die Vorrichtungen zum Auffrischen durch eine Folge von durch den Mikroprozessor (MP) ausführbaren Befehlen gebildet werden.

3. Chipkarte nach Anspruch 2, dadurch gekennzeichnet, daß die Folge von Befehlen in dem Festwertspeicher (ROM) angeordnet ist.

4. Chipkarte nach Anspruch 2, dadurch gekennzeichnet, daß die Folge von Befehlen wenigstens zum Teil in dem EEPROM-Speicher angeordnet ist.

5. Chipkarte nach einem der vorangehenden Ansprüche, dadurch gekennzeichnet, daß das Programm eine iterative Schleife umfaßt mit Lesen des Inhaltes eines Wortes, dann Beschreiben dieses Wortes mit dem gelesenen Inhalt ohne vorheriges Löschen des Wortes, dann Inkrementieren einer Speicheradresse, um ein folgendes Wort zu lesen, Wiederholen desselben vom Anfang (AD0) bis zum Ende (AD2) der aufzufrischenden Speicherzone.

6. Chipkarte nach einem der vorangehenden Ansprüche, dadurch gekennzeichnet, daß sie Vorrichtungen zum Auslösen einer Prozedur zum Auffrischen (R), wenn die Karte außerhalb eines vorgegebenen Datums nach ihrer ersten Inbetriebnahme oder nach einer vorangehenden Auffrischung verwendet wird, umfaßt.

7. Chipkarte nach einem der Ansprüche 1 bis 5, dadurch gekennzeichnet, daß sie Vorrichtungen zum Auslösen einer Prozedur zum Auffrischen (R), wenn die Karte eine vorgegebene Anzahl mal (Nφ) nach ihrer ersten Inbetriebnahme oder nach einer vorangehenden Auffrischung verwendet wurde, umfaßt.

8. Chipkarte nach einem der Ansprüche 1 bis 5, dadurch gekennzeichnet, daß sie Vorrichtungen zum Auslösen einer Prozedur zum Auffrischen (R) eines Teils der aufzufrischenden Speicherzone bei jedem Einschalten der Spannung der Karte umfaßt.

9. Chipkarte nach Anspruch 8, dadurch gekennzeichnet, daß die Vorrichtungen zum Auslösen der Prozedur zum Wiederauffrischen (R) einen Zufallsgenerator umfassen, der eine Zufallsadresse in dem Adreßraum der wiederaufzufrischenden Zone erzeugt.

10. Chipkarte nach Anspruch 9, dadurch gekennzeichnet, daß die erzeugte Adresse die Adresse des Anfangs des aufzufrischenden Teils ist, wobei die Endadresse AD(x+k) des Teils erhalten wird durch Inkrementieren der Anfangsadresse ADx um eine vorgegebene Zahl k.

## Claims

1. A chip card having at least one EEPROM memory containing at least one zone for permanent data (Z1, Z2), i.e. which will not be changed whenever the card is used, characterised in that it has means for automatically refreshing the contents of this zone.

2. A chip card as claimed in claim 1, having a micro-processor (MP) with a read only memory (ROM), characterised in that the refreshing means consist of a series of instructions which can be executed by the micro-processor (MP).

3. A chip card as claimed in claim 2, characterised in that the series of instructions is located in the read-only memory (ROM).

4. A chip card as claimed in claim 2, characterised in that the series of instructions is located partially in the EEPROM memory.

5. A chip card as claimed in one of the preceding claims, characterised in that the programme has an iterative loop whereby the contents of a word are read, this word is then written with the contents read without the word being erased beforehand, then a memory is incremented by one address in order to read a subsequent word, and this commencing from the start (ADO) to the end (AD2) of the zone of the memory to be refreshed.

6. A chip card as claimed in one of the preceding claims, characterised in that it has means for triggering a refresh procedure (R) when the card is used beyond a predetermined date since it was first introduced into service or since a previous refresh procedure.

7. A chip card as claimed in one of claims 1 to 5, characterised in that it has means for triggering a refresh procedure (R) when the card has been used a predetermined number of times (NØ) since it was first introduced into service or since a previous refresh procedure.

8. A chip card as claimed in any one of claims 1 to 5, characterised in that it has means for triggering a refresh procedure (R) on a part of the memory zone to be refreshed each time voltage is applied to the card.

9. A chip card as claimed in claim 8, characterised in that the means for triggering the refresh procedure (R) consist of a random generator which generates a random address contained in the address space of the zone to be refreshed.

10. A chip card as claimed in claim 9, characterised in that the address generated is the initial address of the part to be refreshed, the end address AD(x+k) of the part being obtained by incrementing the initial address ADx by a predetermined number k.
